# EUROPEAN PATENT APPLICATION

(11) **EP 4 451 548 A1**
(43) Date of publication of application: **23.10.2024**
(21) Application number: 22907506.4
(22) Date of filing: 15.12.2022
(51) Int. Cl.: H02P 27/06

(54) **MOTOR DRIVE DEVICE**

(30) Priority: 15.12.2021 JP 2021203116
(71) Applicant: Nabtesco Corporation, Tokyo 102-0093 (JP)
(72) Inventor: ONO, Yasuo, Tokyo 102-0093 (JP); HAIDER, Michael, 8092 Zurich (CH); BORTIS, Dominik, 8092 Zurich (CH); KOLAR, Johann Walter, 8092 Zurich (CH)
(74) Representative: Grünecker Patent- und Rechtsanwälte PartG mbB
(86) International application number: PCT/JP2022/046205
(87) International publication number: WO 2023/112983

(57) **Abstract**

A motor drive apparatus includes: a rectifier circuit that converts a power supply voltage from a single-phase or three-phase AC power supply into a DC voltage; an inverter circuit that converts the DC voltage output from the rectifier circuit into a motor drive voltage and outputs the motor drive voltage to a motor; a control unit that controls the rectifier circuit and the inverter circuit; and a detection unit that detects a decrease in the power supply voltage based on a voltage value or phase of the power supply voltage. The control unit controls the rectifier circuit and the inverter circuit to output a motor power calculated from a target speed of the motor to the motor, when a decrease in the power supply voltage is not detected. The control unit controls the inverter circuit to maintain a voltage of a DC link connecting the rectifier circuit and the inverter circuit by using regenerative power obtained from the motor, when a decrease in the power supply voltage is detected.

## Description

### BACKGROUND OF THE INVENTION

### 1. Field of the Invention

The present disclosure relates to motor drive apparatuses.

Priority is claimed to Japanese Patent Application No.2021-203116, the entire content of which is incorporated herein by reference.

### 2. Description of the Related Art

An apparatus for converting an AC supply power into a three-phase AC power to drive a motor, including a rectifier circuit, a smoothing capacitor, and an inverter circuit, is disclosed (see, for example, Patent Literature 1) .
[Patent Literature 1] JPH11-289769

### SUMMARY OF THE INVENTION

For example, a motor drive apparatus used to drive a motor for a vehicle such as a railway receives power from a power supply while the vehicle is running. The power supply voltage in this case includes various instantaneous interruptions and noises. Systems used in industries other than railways are also basically required to operate continuously. In order to minimize an impact of instantaneous interruption and noise of the power supply, it is necessary that the system continues to operate without tripping of the power supply and that the torque necessary for the system is supplied without delay.

A motor drive apparatus according to an embodiment of the present disclosure includes: a rectifier circuit that converts a power supply voltage from a single-phase or three-phase AC power supply into a DC voltage; an inverter circuit that converts the DC voltage output from the rectifier circuit into a motor drive voltage and outputs the motor drive voltage to a motor; a control unit that controls the rectifier circuit and the inverter circuit; and a detection unit that detects a decrease in the power supply voltage based on a voltage value or phase of the power supply voltage. The control unit controls the rectifier circuit and the inverter circuit to output a motor power calculated from a target speed of the motor to the motor, when a decrease in the power supply voltage is not detected, and controls the inverter circuit to maintain a voltage of a DC link connecting the rectifier circuit and the inverter circuit by using regenerative power obtained from the motor, when a decrease in the power supply voltage is detected.

In one embodiment, the AC power supply may be a single-phase power supply. The control unit calculates a rectified voltage based on the target speed of the motor and a current speed of the motor, calculates a capacitor power necessary to maintain the voltage of the DC link voltage constant, and controls the rectifier circuit and the inverter circuit to output the motor power calculated by subtracting the capacitor power from the rectified power to the motor, thereby outputting a pulsation of the single-phase power supply to the motor, when a decrease in the power supply voltage is not detected, and the control unit sets the rectified power to zero and controls the inverter circuit so that the capacitor power is supplied by using the regenerative power from the motor, thereby maintaining the voltage of the DC link, when a decrease in the power supply voltage is not detected.

In one embodiment, the rectifier circuit may include a PFC circuit that improves a power factor of the AC power supply. The control unit controls the PFC circuit to improve the power factor of the AC power supply when a decrease in the power supply voltage is not detected, and the control unit does not control the PFC circuit and does not improve the power factor of the AC power supply when a decrease in the power supply voltage is detected.

In one embodiment, the AC power supply may be a single-phase power supply. The control unit converts the power supply voltage into an α axis voltage, a β axis voltage, and a peak component, generates a target voltage based on the α axis voltage, the β axis voltage, and the peak component, and controls the rectifier circuit and the inverter circuit so that a phase of a current supplied to the motor matches a phase of the target voltage. The detection unit detects a decrease in the power supply voltage based on the α axis voltage, the β axis voltage, and the peak component derived from a conversion in the control unit.

In one embodiment, the detection unit may collect the power supply voltage to generate reference voltage, and, subsequently, compare the reference voltage with the power supply voltage to detect that the power supply voltage has decreased.

In one embodiment, the detection unit may detect that the power supply voltage has decreased when an amount of fluctuation of the power supply voltage is less than a predetermined value continuously during a predetermined time.

In one embodiment, the motor drive apparatus may include a voltage monitoring unit that monitors a history of the voltage value of the DC link. Supply of power to the motor is stopped when the voltage monitoring unit detects that the voltage value of the DC link fallen below a predetermined lower limit, and supply of power to the motor may be restored when the voltage monitoring unit detects that the voltage value of the DC link reaches a predetermined upper limit value or higher.

Optional combinations of the aforementioned constituting elements, and replacement of constituting elements or implementation of the present invention in the form of methods, apparatuses, programs, transitory or non-transitory recording mediums storing programs, systems, etc. may also be practiced as optional modes of the present disclosure.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:
Fig. 1 is a functional block diagram of a motor drive apparatus according to the first embodiment;
Fig. 2 is a functional block diagram of a motor drive apparatus according to the second embodiment;
Fig. 3 is a functional block diagram of a motor drive apparatus according to the third embodiment;
Fig. 4 is a functional block diagram of a motor drive apparatus according to the fourth embodiment; and
Fig. 5 is a functional block diagram of the control unit and the power supply voltage distortion removal circuit.

### DETAILED DESCRIPTION OF THE INVENTION

The invention will now be described by reference to the preferred embodiments. This does not intend to limit the scope of the present invention, but to exemplify the invention.

Hereinafter, the present disclosure will be described based on preferred embodiments with reference to drawings. The embodiment does not limit the scope of the invention but exemplifies the invention. Not all of the features and the combinations thereof described in the embodiment are necessarily essential to the invention. Identical or like constituting elements, members, processes shown in the drawings are represented by identical symbols and a duplicate description will be omitted as appropriate. The scales and shapes shown in the figures are defined for convenience's sake to make the explanation easy and shall not be interpreted limitatively unless otherwise specified. Terms like "first", "second", etc. used in the specification and claims do not indicate an order or importance by any means unless otherwise specified and are used to distinguish a certain feature from the others. Those of the members that are not material to the description of the embodiments are omitted in the drawings.

### [First embodiment]

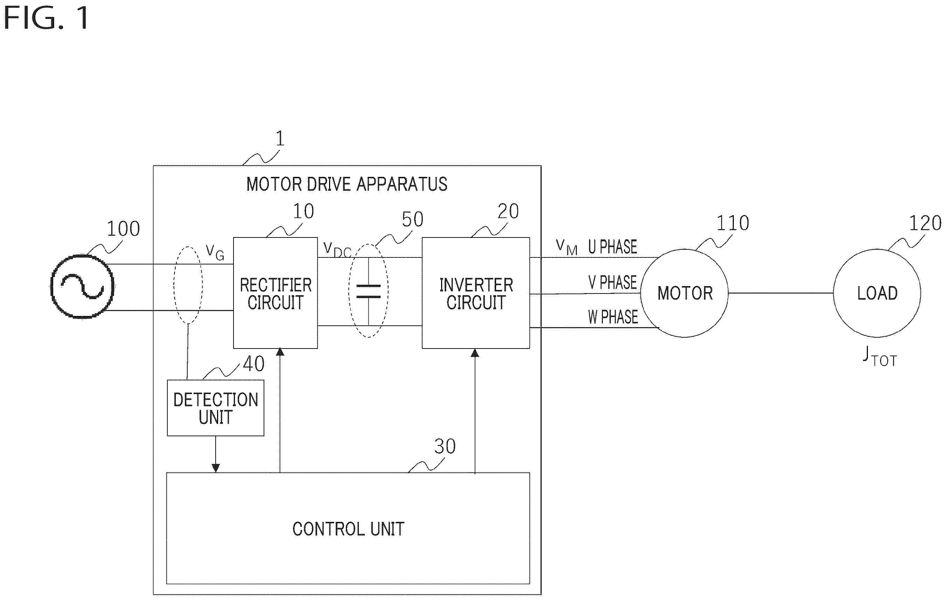

Fig. 1 is a functional block diagram of a motor drive apparatus 1 according to the first embodiment. The motor drive apparatus 1 functions as a system that drives a motor 110 based on an input voltage vG from an AC power supply 100. The motor drive apparatus 1 can be used to drive various motors such as those of railway vehicles, pumps, compressors, electric actuators of ships and airplanes, and robot arms. The three-phase power generated by the motor drive apparatus 1 is output to an external apparatus such as the motor 110. In the present specification, the upstream side may be referred to as the preceding stage or input, and the downstream side may be referred to as the succeeding stage or output along the flow of power or signal from the AC power supply 100 toward the output to the motor 110.

The motor drive apparatus 1 includes a rectifier circuit 10, an inverter circuit 20, a control unit 30, and a detection unit 40. The rectifier circuit 10 and the inverter circuit 20 are electrically connected by a DC link 50. As will be described later, the control unit 30 executes motor control according to DC link voltage control of the DC link 50, output current control of the inverter circuit 20, and rotation angle detection of the motor 110.

The AC power supply 100 may be, for example, a commercial power supply or a generator. The AC power supply 100 outputs an input voltage to the rectifier circuit 10.

The rectifier circuit 10 generates a DC link voltage vDC after full-wave rectification of the power supply voltage vG input from the AC power supply 100. The rectifier circuit 10 outputs the DC link voltage vDC to the inverter circuit 20. The rectifier circuit 10 like this may be realized using a known technology.

The inverter circuit 20 is provided in a stage succeeding the rectifier circuit 10 and generates a motor drive voltage vM, which is a three-phase AC voltage, based on the DC link voltage vDC. The three-phase AC voltage may be comprised of, for example, a U phase, a V phase, and a W phase and may alternate with a phase difference of 2n/3. The inverter circuit 20 like this may be realized using a known technology.

The control unit 30 controls the rectifier circuit 10 and the inverter circuit 20. Specifically, the control unit 30 controls the rectifier circuit 10 and the inverter circuit 20 to output a motor power calculated from the target speed of the motor to the motor 110, when a decrease in the power supply voltage vG is not detected by the detection unit 40 described below. When a decrease in the power supply voltage vG is detected by the detection unit 40, on the other hand, the control unit 30 controls the inverter circuit 20 so that the DC link voltage vDC of the DC link 50 is maintained using the regenerative power obtained from the motor 110.

The detection unit 40 detects a decrease in the power supply voltage vG based on the voltage value or phase of the power supply voltage vG.

The motor 110 is driven by the motor drive voltage vM supplied from the inverter circuit 20. The motor 110 transmits the obtained power to an external load 120 to move the load 120.

The load 120 is a load such as a flywheel moved by the motor 110 and has a predetermined inertia JTOT (for example, a moment of inertia).

According to this embodiment, the motor drive apparatus continues to output the motor power calculated from the target speed of the motor to the motor 110 during normal times when the power supply voltage does not decrease. Meanwhile, the DC link voltage is maintained by the regenerative power from the motor when the power supply voltage decreases. This allows the motor drive system to continue to operate in the event of a power supply trip such as instantaneous interruption of the power and allows the motor to return to the target speed quickly after the power is restored.

In a certain embodiment, the AC power supply 100 is a single-phase power supply. When a decrease in the power supply voltage vG is not detected by the detection unit 40, the control unit 30 calculates a supply power PG based on the target speed of the motor 110 and the current speed of the motor 110, calculates a capacitor power pC necessary to maintain the DC link voltage vDC constant based on the target voltage and the current voltage of the DC link voltage, and controls the rectifier circuit 10 and the inverter circuit to output a motor power pM, calculated by subtracting the capacitor power pC from the supply power PG, to the motor. This causes the pulsation of the single-phase power supply 100 to be output to the motor 110. This pulsation is absorbed by the inertia JTOT of the load 120 connected to the motor 110. When a decrease in the power supply voltage vG is detected by the detection unit 40, on the other hand, the control unit 30 sets the supply power PG to zero and controls the inverter circuit 20 so that the capacitor power is supplied by the regenerative power from the motor 110. This maintains the DC link voltage vDC of the DC link 50.

According to this embodiment, the pulsation of the single-phase power supply is output to the motor in the absence of a decrease in the power supply voltage and so is absorbed by the inertia of the load connected to the motor. This control was originally devised by the present disclosers. We have named this control as MPPB (Machine-Integrated Power Pulsation Buffer) control.

### [Second embodiment]

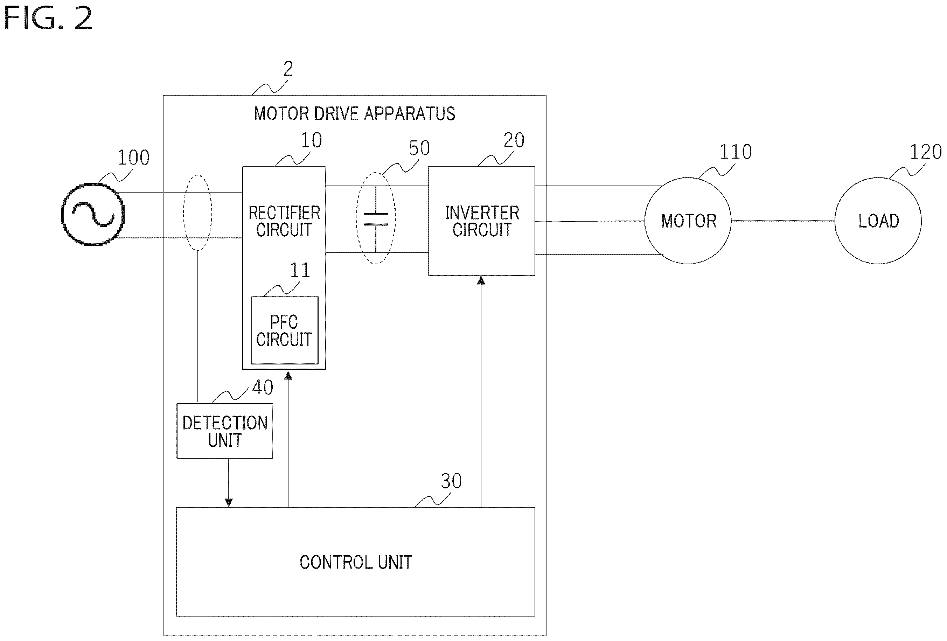

Fig. 2 is a functional block diagram of a motor drive apparatus 2 according to the second embodiment. The rectifier circuit 10 of the motor drive apparatus 2 includes a PFC circuit 11 that improves the power factor of the power supply. The PFC circuit 11 improves the power factor drop caused by a phase shift between the AC power supply voltage and the energizing current to bring the power factor closer to 1. An existing scheme such as a passive scheme in which a reactor is inserted in series with the power supply, a partial switching scheme in which a switch is additionally introduced in the part where the reactor of the passive scheme is inserted, and a switching scheme in which a step-up chopper circuit is inserted between a diode bridge and the load, and the current is controlled by a switch to match the phase with that of the input voltage may be used in the PFC circuit 11.

When a decrease in the power supply voltage vG is not detected by the detection unit 40, the control unit 30 controls the PFC circuit 11 to improve the power factor of the power supply. When a decrease in the power supply voltage vG is detected by the detection unit 40, on the other hand, the control unit 30 does not control the PFC circuit 11 and does not improve the power factor of the power supply.

According to this embodiment, the power factor can be improved during normal operation. When a temporary decrease occurs in the power supply voltage, on the other hand, the power supply current does not follow the power supply voltage so that disturbance of the power supply current waveform can be prevented and harmonic noise can be suppressed.

### [Third embodiment]

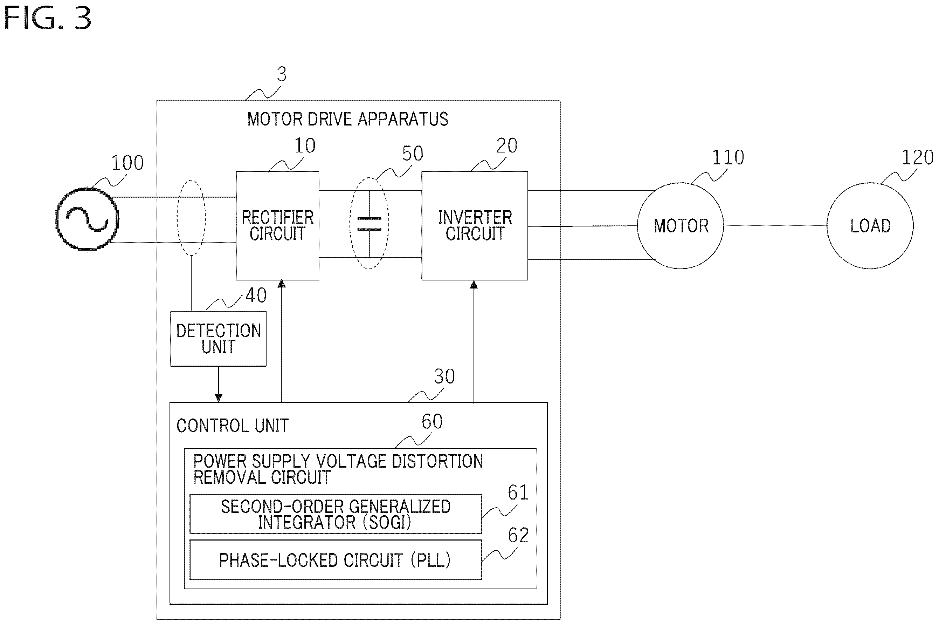

Fig. 3 is a functional block diagram of a motor drive apparatus 3 according to the third embodiment. In this embodiment, the AC power supply 100 is a single-phase power supply. The motor drive apparatus 3 includes a rectifier circuit 10, an inverter circuit 20, a control unit 30, a detection unit 40, and a power supply voltage distortion removal circuit 60. That is, the motor drive apparatus 3 differs from the motor drive apparatus 1 of Fig. 1 in that the power supply voltage distortion removal circuit 60 is additionally provided. The other features of the motor drive apparatus 3 are common to those of the motor drive apparatus 1.

The power supply voltage distortion removal circuit 60 includes a second-order generalized integrator 61 and a phase-locked circuit 62. In general, a distortion in a power supply voltage can be removed by a low-pass filter. Since the low-pass filter induces a phase shift, however, the power factor cannot be controlled such that the power factor=1. This is addressed by using a phase-locked circuit (Phase-Locked Loop or PLL) instead of a low-pass filter to reconstruct the power supply voltage. While PLL for a three-phase power supply is easy to implement, a different approach is required for a single-phase power supply. A second-order generalized integrator (SOGI) can provide the PLL with quadrature voltages vα and vβ generated from an input single-phase voltage based on the supply voltage vG measured in the input stage. This allows the PLL to calculate the phase angle and generate a target voltage.

According to this embodiment, distortion of the power supply voltage can be removed while power factor=1 control is maintained even in the case of a single-phase power supply.

### [Fourth embodiment]

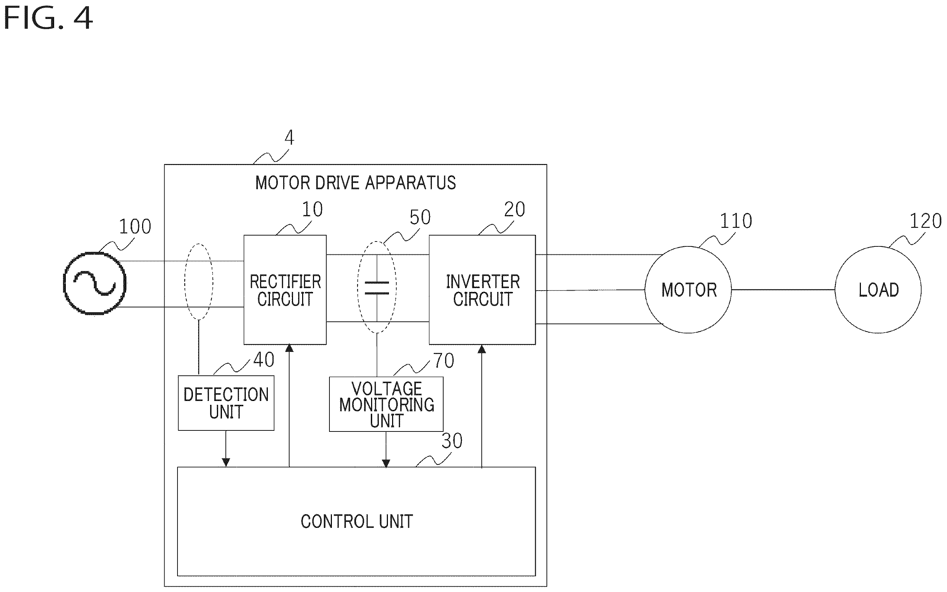

Fig. 4 is a functional block diagram of a motor drive apparatus 4 according to the fourth embodiment. The motor drive apparatus 4 includes a rectifier circuit 10, an inverter circuit 20, a control unit 30, a detection unit 40, and a voltage monitoring unit 70. That is, the motor drive apparatus 3 differs from the motor drive apparatus 1 of Fig. 1 in that the voltage monitoring unit 70 is additionally provided. The other features of the motor drive apparatus 4 are common to those of the motor drive apparatus 1.

The voltage monitoring unit 70 monitors the history of the voltage value vDC of the DC link. The control unit 30 stops supplying power to the motor 110 when the voltage monitoring unit 70 detects that the voltage value vDC of the DC link has fallen below a predetermined lower limit. The control unit 30 restores the supply of power to the motor 110 when the voltage monitoring unit 70 detects that the voltage value of the DC link reaches a predetermined upper limit value or higher. The lower limit value may be set to, for example, 10% of the normal voltage value, and the upper limit value may be set to, for example, 30% of the normal voltage value.

According to this embodiment, the system can be safely stopped when the DC link voltage value vDC decreases and falls below a predetermined lower limit value before reaching 0. On the other hand, the system can be quickly restored when the DC link voltage value vDC is restored and exceeds a predetermined upper limit value before reaching a normal value.

### [Control method]

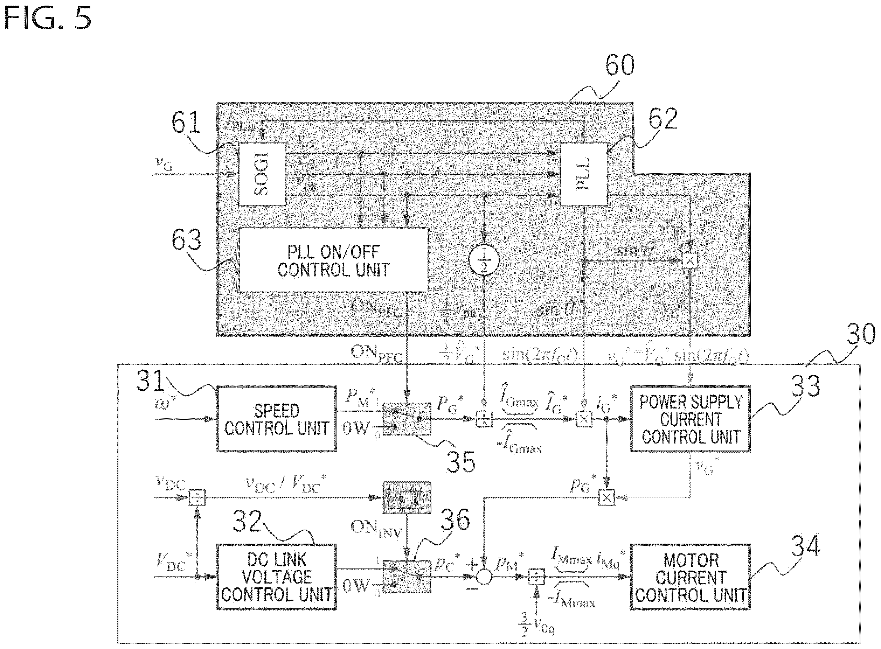

Hereinafter, the control method of the embodiment will be described with reference mainly to Fig. 5. Fig. 5 is a functional block diagram of the control unit 30 and the power supply voltage distortion removal circuit 60.

The control unit 30 includes a speed control unit 31, a DC link voltage control unit 32, a power supply current control unit 33, a motor current control unit 34, a first switch 35, and a second switch 36.

The power supply voltage distortion removal circuit 60 includes a second-order generalized integrator 61 (SOGI), a phase-locked circuit 62 (PLL), and a PLL ON/OFF control unit 63.

### [Power supply voltage distortion removal circuit]

The second-order generalized integrator 61 generates, from the power supply voltage vG, orthogonal components vα and vβ and a peak component vpk of the voltage. The second-order generalized integrator 61 outputs vα, vβ, and vpk to the phase-locked circuit 62. The phase-locked circuit 62 calculates a power supply voltage frequency fPLL based on vα, vβ, and vpk, and feeds the frequency back to the second-order generalized integrator 61. The phase-locked circuit 62 also calculates a phase angle θ=2πfGt and uses the angle to generate a target voltage vG*. The target voltage vG* is input to the power supply current control unit 33 and is used for feedforward of the power supply.

### [First switch]

The first switch 35 of the control unit 30 is controlled to be ON and OFF by the PLL ON/OFF control unit 63 of the power supply voltage distortion removal circuit 60. The detection unit 40 detects a decrease in the power supply voltage vG based on vα, vβ, and the peak component vpk generated from the power supply voltage vG. When a decrease in the power supply voltage vG is not detected by the detection unit 40, the PLL ON/OFF control unit 63 turns on the first switch 35. When a decrease in the power supply voltage vG is detected by the detection unit 40, on the other hand, the PLL ON/OFF control unit 63 turns off the first switch 35. This causes the PFC circuit 11 to improve the power factor of the power supply in the absence of a decrease in the power supply voltage vG. In the presence of a decrease in the power supply voltage vG, on the other hand, the power factor of the power supply is not improved by the PFC circuit 11.

### [Second switch]

The second switch 36 of the control unit 30 is controlled to be ON and OFF based on the history of the DC link voltage value vDC. That is, the second switch 36 is turned off when the voltage monitoring unit 70 detects that the DC link voltage value vDC has fallen below a predetermined lower limit. This stops power supply to the motor 110. When the voltage monitoring unit 70 detects that the DC link voltage value vDC has reached a predetermined upper limit value or higher, on the other hand, the second switch 36 is turned on. This restores power supply to the motor 110.

### [Speed control unit]

A target motor speed ω* of the motor 110 is input to the input terminal of the speed control unit 31. The speed control unit 31 calculates and outputs a target motor power pM* from the target motor speed ω*. When the first switch 35 is ON, the target motor power pM* is used for power supply voltage control and motor current control. When the first switch 35 is OFF, on the other hand, the target motor power pM* is not used to control the motor drive apparatus. The speed control unit operates to continue to calculate, but the result of the calculation is not used. This enables a smooth recovery of the system when the power supply is restored.

### [DC link voltage control unit]

A target DC link voltage vDC* is input to the input terminal of the DC link voltage control unit 32. The DC link voltage control unit 32 calculates and outputs a target DC link capacitor power pc* from the target DC link voltage vDC*. When the second switch 36 is ON, the target DC link capacitor power pc* is used for motor current control. When the second switch 36 is OFF, on the other hand, the target DC link capacitor power pc* is not used for motor current control. That is, the function of the DC link voltage control unit 32 stops at that stage.

### [Power supply current control unit]

A target average power supply current IG* calculated from the target motor power pM* from the speed control unit 31 and the phase angle θ from the phase-locked circuit 62 are input to the input end of the power supply current control unit 33. The power supply current control unit 33 calculates and outputs the target power supply voltage vG*. When this control unit returns from a stop, the entire initial start-up sequence is performed.

### [Motor current control unit]

The target DC link capacitor power pc* from the DC link voltage control unit 32 and a target supply power pG* from the power supply current control unit 33 calculated from the target power supply voltage vG* are input the motor current control unit 34. The motor current control unit 34 controls the motor current based on these.

An explanation based on the embodiment of the present disclosure has been given above. The embodiment is intended to be illustrative only and it will be understood by those skilled in the art that variations and modifications are possible within the claim scope of the present disclosure and that such variations and modifications are also within the claim scope of the present disclosure. Accordingly, the description and drawings in the specification shall be interpreted as being illustration instead of limitation.

The method by which the detection unit detects a decrease in the power supply voltage is not limited to the details described with reference to Fig. 5.

### [Variation 1]

It will be assumed that the motor drive apparatus is applied to a motor that drives a compressor or the like inside a railway vehicle. In this case, the vehicle is not running and a power supply trip such as instantaneous interruption is unlikely to occur when the apparatus is started. Therefore, the detection unit may collect the power supply voltage during a predetermined time (for example, 1 minute) after the apparatus is started, generate a reference voltage, and, after a predetermined time has elapsed, compare the reference voltage with a newly collected power supply voltage to detect whether the power supply voltage has decreased. In this manner, a decrease in the power supply voltage can be detected more accurately. It should be noted that this method is not limited to railway vehicle applications but can be used in any application because it can be said that an instantaneous interruption of power supply is generally unlikely to occur when an apparatus is started.

### [Variation 2]

The detection unit may detect that the power supply voltage has decreased (an instantaneous interruption has occurred) when the amount of fluctuation of the power supply voltage is less than a predetermined value (for example, less than 0.1 mV) continuously during a predetermined time (for example, 1 minute).

### INDUSTRIAL APPLICABILITY

The present invention can be used to drive various motors such as those of railway vehicles, pumps, compressors, electric actuators of ships and airplanes, and robot arms.

### REFERENCE SIGNS LIST

1 ... motor drive apparatus, 2 ... motor drive apparatus, 3 ... motor drive apparatus, 4 ... motor drive apparatus, 10 ... rectifier circuit, 20 ... inverter circuit, 30 ... control unit, 31 ... speed control unit, 32 ... DC link voltage control unit, 33 ... power supply current control unit, 34 ... motor current control unit, 35 ... first switch, 36 ... second switch, 40 ... detection unit, 50 ... DC link, 60 ... power supply voltage distortion removal, 61 ... second-order generalized integrator (SOGI), 62 ... phase-locked circuit (PLL), 63 ... PLL ON/OFF control unit, 70 ... voltage monitoring unit, 100 ... AC power supply, 110 ... motor, 120 ... load

## Claims

1. A motor drive apparatus (1) comprising:
a rectifier circuit (10) that converts a power supply voltage from a single-phase or three-phase AC power supply (100) into a DC voltage;
an inverter circuit (20) that converts the DC voltage output from the rectifier circuit (10) into a motor drive voltage and outputs the motor drive voltage to a motor (110);
a control unit (30) that controls the rectifier circuit (10) and the inverter circuit (20); and
a detection unit (40) that detects a decrease in the power supply voltage based on a voltage value or phase of the power supply voltage,
wherein the control unit (30)
controls the rectifier circuit (10) and the inverter circuit (20) to output a motor power calculated from a target speed of the (110) motor to the motor (110), when a decrease in the power supply voltage is not detected, and
controls the inverter circuit (20) to maintain a voltage of a DC link (50) connecting the rectifier circuit (10) and the inverter circuit (20) by using regenerative power obtained from the motor (110), when a decrease in the power supply voltage is detected.

2. The motor drive apparatus (1) according to claim 1,
wherein the AC power supply (100) is a single-phase power supply,
wherein, the control unit (30) calculates a rectified voltage based on the target speed of the motor (110) and a current speed of the motor (110), calculates a capacitor power necessary to maintain the voltage of the DC link voltage constant, and controls the rectifier circuit (10) and the inverter circuit (20) to output the motor power calculated by subtracting the capacitor power from the rectified power to the motor (110), thereby outputting a pulsation of the single-phase power supply to the motor (110), when a decrease in the power supply voltage is not detected, and
wherein the control unit (30) sets the rectified power to zero and controls the inverter circuit (20) so that the capacitor power is supplied by using the regenerative power from the motor (110), thereby maintaining the voltage of the DC link (50), when a decrease in the power supply voltage is not detected.

3. The motor drive apparatus (2) according to claim 1,
wherein the rectifier circuit includes a PFC circuit (11) that improves a power factor of the AC power supply (100),
wherein the control unit (30) controls the PFC circuit (11) to improve the power factor of the AC power supply (100) when a decrease in the power supply voltage is not detected, and
wherein the control unit (30) does not control the PFC circuit (11) and does not improve the power factor of the AC power supply (100) when a decrease in the power supply voltage is detected.

4. The motor drive apparatus (1) according to claim 1,
wherein the AC power supply (100) is a single-phase power supply,
wherein the control unit (30) converts the power supply voltage into an α axis voltage, a β axis voltage, and a peak component, generates a target voltage based on the α axis voltage, the β axis voltage, and the peak component, and controls the rectifier circuit (10) and the inverter circuit (20) so that a phase of a current supplied to the motor (110) matches a phase of the target voltage, and
wherein the detection unit (40) detects a decrease in the power supply voltage based on the α axis voltage, the β axis voltage, and the peak component derived from a conversion in the control unit (30).

5. The motor drive apparatus (1) according to claim 1,
wherein the detection unit (40) collects the power supply voltage to generate reference voltage, and, subsequently, compares the reference voltage with the power supply voltage to detect that the power supply voltage has decreased.

6. The motor drive apparatus (1) according to claim 1,
wherein the detection unit (40) detects that the power supply voltage has decreased when an amount of fluctuation of the power supply voltage is less than a predetermined value continuously during a predetermined time.

7. The motor drive apparatus (4) according to claim 1, comprising:
a voltage monitoring unit (70) that monitors a history of the voltage value of the DC link,
wherein supply of power to the motor (110) is stopped when the voltage monitoring unit (70) detects that the voltage value of the DC link (50) fallen below a predetermined lower limit, and
wherein supply of power to the motor (110) is restored when the voltage monitoring unit (70) detects that the voltage value of the DC link (50) reaches a predetermined upper limit value or higher.
